# EUROPEAN PATENT SPECIFICATION

(11) **EP 2 639 420 B1**
(45) Date of publication and mention of the grant of the patent: **24.02.2021**
(21) Application number: 12762187.8
(22) Date of filing: 19.01.2012
(51) Int. Cl.: F02D 41/04, F02D 41/02, F02D 41/40, F01N 3/08, F01N 3/20, F02D 41/14

(54) **EXHAUST-GAS PURIFIER FOR INTERNAL COMBUSTION ENGINE**
ABGASREINIGUNGSVORRICHTUNG FÜR EINEN VERBRENNUNGSMOTOR
ÉPURATEUR DE GAZ D'ÉCHAPPEMENT POUR MOTEUR À COMBUSTION INTERNE

(43) Date of publication of application: 18.09.2013
(73) Proprietor: TOYOTA JIDOSHA KABUSHIKI KAISHA, Toyota-shi, Aichi-ken, 471-8571 (JP)
(72) Inventor: NAKAMURA, Toshihiro, Toyota-shi, Aichi-ken 471-8571 (JP)
(74) Representative: D Young & Co LLP
(86) International application number: PCT/JP2012/051072
(87) International publication number: WO 2013/108387

(56) References cited:
- EP-A1- 1 541 844
- EP-A1- 1 905 991
- EP-A2- 1 722 087
- WO-A1-2007/010700
- JP-A- 2003 129 830
- JP-A- 2005 105 828
- JP-A- 2009 191 726

## Description

The present invention relates to an exhaust purification apparatus that purifies exhaust from an internal combustion engine (sometimes referred to hereinafter as an "engine"). In particular, the present invention relates to an improvement to S (sulfur) poison recovery control performed on an exhaust purification catalyst.

### [Background Art]

In general, with an engine in which a large portion of the total operation region is occupied by the operation region in which an air-fuel mixture having a high air-fuel ratio (lean atmosphere) is burned, such as a diesel engine or a lean combustion gasoline engine, NOx contained in the exhaust needs to be eliminated. For this reason, a NOx storage/reduction catalyst for storing (absorbing) the NOx contained in the exhaust is disposed in the engine exhaust path so as to purify the exhaust.

Examples of catalysts used as the NOx storage/reduction catalyst include a NOx storage reduction (NSR) catalyst and a diesel particulate-NOx reduction system (DPNR) catalyst.

If the exhaust air-fuel ratio (A/F) is lean, that is to say, if the atmosphere in the exhaust system is in a high oxygen concentration state, this NOx storage/reduction catalyst stores the NOx in the exhaust. On the other hand, if the exhaust air-fuel ratio has become rich, or more specifically if the atmosphere in the exhaust system has entered a low oxygen concentration state, and furthermore the exhaust has come to contain hydrocarbon (HC), carbon monoxide (CO), and the like, the NOx storage/reduction catalyst releases and reduces the NOx that it has absorbed. Specifically, the NOx absorbed by the NOx storage/reduction catalyst is released due to the reduction in the oxygen concentration, and the released NOx is purified by being reduced through a reaction with an unburned fuel component contained in the exhaust.

There are also many cases where a sulfur component is contained in engine fuel (e.g., light oil and gasoline). For this reason, the exhaust contains not only the aforementioned NOx, but also sulfur oxide (SOx) such as SO₂ and SO₃ that are generated at the same time when the engine is running. Likewise to NOx, this SOx is also absorbed by the NOx storage/reduction catalyst. As the engine running time elapses, the SOx absorbed by the NOx storage/reduction catalyst forms a chemically stable substance such as a sulfate salt, which gradually accumulates in the NOx storage/reduction catalyst so as to produce so-called sulfur poison (sometimes referred to hereinafter as "S poison").

As the production of S poison progresses, the limit of the amount of NOx that can be absorbed by the NOx storage/reduction catalyst and the NOx absorption efficiency decrease, thus resulting in a decrease in NOx purification efficiency. In order to resolve this, S poison recovery control for releasing SOx from the NOx storage/reduction catalyst is performed at a predetermined timing while the engine is running.

The amount of SOx absorbed by the NOx storage/reduction catalyst (S poison amount) is calculated based on a history of the operating condition of the engine, and the S poison recovery control is executed each time an integrated value of the S poison amount reaches a predetermined value (e.g., see PTL 1 and PTL 2). In the case of a diesel engine, for example, according to this S poison recovery control, post-injection is executed at a predetermined angle of delay timing after piston compression top dead center so as to raise the exhaust temperature and raise the floor temperature of the NOx storage/reduction catalyst to a target temperature. The exhaust air-fuel ratio is then made rich in this high-temperature environment so as to promote the release of the SOx from the NOx storage/reduction catalyst and the reduction thereof, thus recovering the NOx absorption performance.

EP 1 905 991 A1 relates to an exhaust gas purification system. In a regenerative control for recovering purification ability of the exhaust gas purification device (12), injection quantities (Op) of post injections are calculated based on previously set map data (Mp), accumulated to calculate a post injection accumulated injection amount (LOp), and, when the accumulated injection amount (LOp) exceeds a predetermined determination value (Cp), the post injection is stopped to cease the regenerative control.

EP 1 722 087 A2 relates to an exhaust gas purifying apparatus for an internal combustion engine including a particulate filter for trapping particulates found in the exhaust gases of the engine. The regeneration process for burning the particulates trapped in the particulate filter is executed by performing post injection of fuel. The regeneration process is suppressed according to an amount of fuel injected during post injection.

### [Citation List]

### [Patent Literature]

[PTL 1] JP 2003-129830A (equivalent to DE 10249880 A1 and FR 2831603 A1)
[PTL 2] JP 2005-105828A

EP 1 905 991 A1

EP 1 722 087 A2

### [Disclosure of Invention]

### [Technical Problems]

Incidentally, if the vehicle speed is relatively low, for example, when the above-described S poison recovery control is executed, the injection amount in main injection will be relatively low, and the engine speed will be relatively low, thus making it impossible to sufficiently raise the exhaust temperature even if the aforementioned post-injection is executed. Therefore even if the exhaust air-fuel ratio is made rich in this situation, it is difficult to effectively release SOx from the NOx storage/reduction catalyst.

As a result, the injection amount in post-injection increases in a situation in which SOx has not been sufficiently released. This post-injection is executed at a relatively greatly delayed timing after piston compression top dead center (e.g., 100° after compression top dead center in terms of crank angle (ATDC 100° CA)), while the in-cylinder pressure is relatively low, and therefore the travel distance (flight distance) of the sprayed fuel tends to increase, thus raising the possibility of oil dilution (dilution of engine oil with fuel) due to the sprayed fuel attaching to cylinder wall surfaces. Also, a reduction in SOx release efficiency causes an increase in the fuel injection amount (post-injection amount) required for S poison recovery control, and also leads to a reduction in the fuel consumption rate of the vehicle.

The present invention was achieved in light of this situation, and an object thereof is to provide an exhaust purification apparatus for an internal combustion engine that can suppress oil dilution that accompanies S poison recovery control.
The invention is defined by the independent claims.

### [Means for Solving the Problems]

### - Principle of Solution of Invention -

A principle of a solution of the present invention devised in order to achieve the above-described object is that in the case where the integrated value of the amount of fuel supplied to the exhaust system in order to execute S poison recovery control has reached a predetermined value (e.g., a predetermined value at which the limit of the allowable range of oil dilution is reached), it is determined that the situation is not a situation in which S poison recovery control can be effectively performed with that fuel supply, and that there is the possibility of that fuel leading to oil dilution, and thus S poison recovery control is interrupted.

### - Solving Means -

Specifically, the present invention is premised on an exhaust purification apparatus for an internal combustion engine that performs sulfur poison recovery control for causing a sulfur component that is adsorbed to an exhaust purification catalyst provided in an exhaust system of the internal combustion engine to desorb from the exhaust purification catalyst by supplying fuel to the exhaust system. This exhaust purification apparatus for an internal combustion engine is configured such that the supply of fuel to the exhaust system is interrupted if an integrated amount of fuel supplied to the exhaust system through late post-injection (referred to as "angle-of-delay post-injection" in the present invention) in the sulfur poison recovery control reached a predetermined recovery control interruption amount.

According to this feature, if, for example, the operating condition of the internal combustion engine is not in a situation in which the temperature of the exhaust system is being sufficiently raised (e.g., if the vehicle speed is low) when sulfur poison recovery control is being executed, it is determined that the fuel being supplied to the exhaust system in the sulfur poison recovery control is not being used effectively (e.g., it is determined that when the fuel injected into the combustion chambers is supplied to the exhaust system (post-injection is executed), there is a high possibility of oil dilution due to the fuel attaching to wall surfaces in the combustion chambers), and the supply of fuel to the exhaust system is interrupted. This enables suppressing a negative influence on the internal combustion engine due to the supply of fuel to the exhaust system that accompanies sulfur poison recovery control.

A recovery control interruption amount with respect to the fuel amount is specifically specified as described below. Specifically, if the fuel supplied to the exhaust system is fuel that is supplied from a fuel injection valve for injecting fuel into a combustion chamber, the recovery control interruption amount is set to an amount at which it is determined that an oil dilution rate reached a predetermined value (e.g., an allowable limit) due to the fuel injected from the fuel injection valve attaching to a wall surface in the combustion chamber.

In a situation in which the fuel being supplied to the exhaust system in sulfur poison recovery control is not being used effectively, there is the possibility of oil dilution occurring due to fuel from the fuel injection valve attaching to a wall surface in the combustion chamber. For this reason, if the amount of fuel supplied to the exhaust system has reached a predetermined recovery control interruption amount, it is determined that there is a high possibility of this oil dilution occurring, and the supply of fuel to the exhaust system is interrupted. This makes it possible for the rate of oil dilution that accompanies the execution of sulfur poison recovery control to be maintained in an allowable range, thus maintaining the lubrication performance of the internal combustion engine.

As a specific operation for interrupting the supply of fuel to the exhaust system, as an injection form of fuel injected from the fuel injection valve into the combustion chamber in order to raise the temperature of the exhaust system in the sulfur poison recovery control, angle-of-advance post-injection and angle-of-delay post-injection that are executed after piston compression top dead center are performed, and the supply of fuel to the exhaust system is interrupted if an integrated amount of fuel injected in the angle-of-delay post-injection reached the recovery control interruption amount.

Between these two types of post-injection, the angle-of-advance post-injection is executed at a timing at which the in-cylinder pressure is relatively high, and therefore the flight distance of the fuel is relatively short, there is almost no attachment of fuel to the wall surface in the combustion chamber, and there is almost no oil dilution. In contrast, the angle-of-delay post-injection is executed at a timing at which the in-cylinder pressure is relatively low, and therefore the flight distance of the fuel is relatively long, fuel readily attaches to the wall surface in the combustion chamber, and there is the possibility of oil dilution. For this reason, if the integrated amount of fuel injected in the angle-of-delay post-injection, in which there is a high possibility of oil dilution, has reached the recovery control interruption amount, the supply of fuel to the exhaust system is interrupted, thus making it possible to interrupt the supply of fuel to the exhaust system at a timing that is appropriate according to the degree of oil dilution. In other words, it is possible to prevent the supply of fuel from being interrupted sooner than necessary, as a result of which sulfur poison recovery control is restricted more than necessary, and oil dilution exceeds the allowable limit.

Specifically, the recovery control interruption amount is set to a value that is lower as there is a rise in the oil dilution rate due to the fuel injected from the fuel injection valve attaching to a wall surface in the combustion chamber.

In this case, one of the integrated amount of fuel for suppressing a fuel consumption rate to a value less than or equal to a predetermined value and the integrated amount of fuel for suppressing the oil dilution rate to a value less than or equal to the predetermined value is selected and set as the recovery control interruption amount. Also, the exhaust purification apparatus is configured such that if the oil dilution rate is less than the predetermined value, and the integrated amount of fuel for suppressing the fuel consumption rate to a value less than or equal to the predetermined value is less than the integrated amount of fuel for suppressing the oil dilution rate to a value less than or equal to the predetermined value, the integrated amount of fuel for suppressing the fuel consumption rate to a value less than or equal to the predetermined value is selected as the recovery control interruption amount, and if the oil dilution rate is greater than or equal to the predetermined value, and the integrated amount of fuel for suppressing the oil dilution rate to a value less than or equal to the predetermined value is less than the integrated amount of fuel for suppressing the fuel consumption rate to a value less than or equal to the predetermined value, the integrated amount of fuel for suppressing the oil dilution rate to a value less than or equal to the predetermined value is selected as the recovery control interruption amount.

For this reason, if the oil dilution rate is less than the predetermined value, and the oil dilution rate has leeway with respect to the allowable limit value, the integrated amount of fuel for suppressing the fuel consumption rate to a value less than or equal to the predetermined value is selected as the recovery control interruption amount, and thus the timing for interrupting the supply of fuel to the exhaust system is set so as to improve the fuel consumption rate of the internal combustion engine. On the other hand, if the oil dilution rate is greater than or equal to the predetermined value, and the oil dilution rate has little leeway with respect to the allowable limit value, the integrated amount of fuel for suppressing the oil dilution rate to a value less than or equal to the predetermined value is selected as the recovery control interruption amount, and thus the timing for interrupting the supply of fuel to the exhaust system is set so as to maintain the oil dilution rate at or below the allowable limit.

The following is a specific example of a configuration for resuming the supply of fuel to the exhaust system after being interrupted as described above. Specifically, after the integrated amount of fuel supplied to the exhaust system reaches the recovery control interruption amount and the supply of fuel is interrupted, if a situation occurs in which the temperature of the exhaust system reaches a predetermined temperature, the supply of fuel to the exhaust system is resumed. More specifically, in the case of mounting in a vehicle, the situation in which the temperature of the exhaust system reaches the predetermined temperature is a case in which the vehicle travelling speed has continued to have reached a predetermined speed for a predetermined time period.

This enables resuming sulfur poison recovery control so as to make it possible to cause desorption of a large portion of the sulfur component that adsorbed to the exhaust purification catalyst.

### [Effects of the Invention]

With the present invention, if the integrated amount of fuel supplied to the exhaust system through late post-injection (angle-of-delay post-injection) in sulfur poison recovery control has reached a predetermined recovery control interruption amount, the supply of fuel to the exhaust system is interrupted. Accordingly, if the fuel being supplied to the exhaust system in the sulfur poison recovery control is not being used effectively, that supply of fuel can be interrupted, and it is possible to suppress a negative influence on the internal combustion engine due to that supply of fuel to the exhaust system.

### [Brief Description of Drawings]

[FIG. 1]

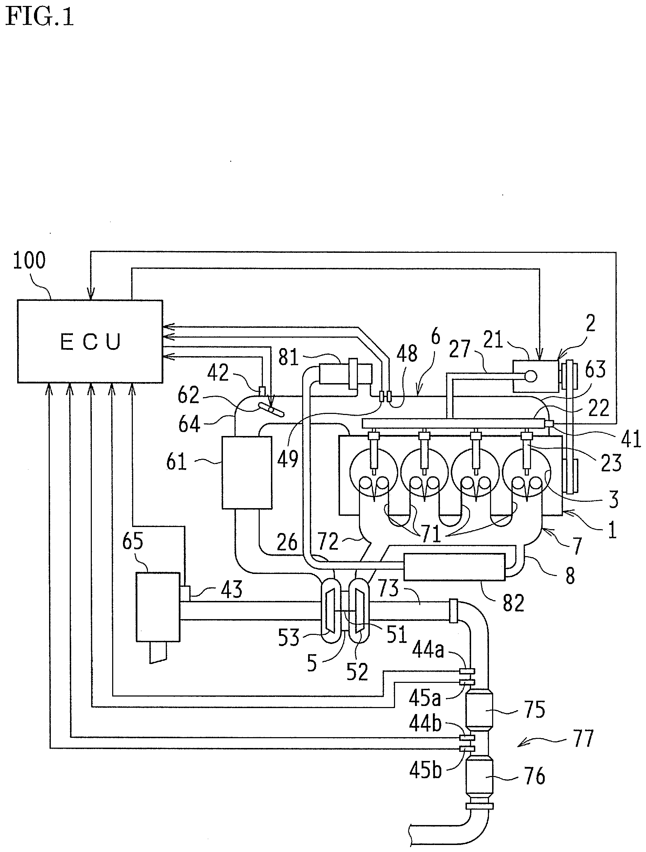

   FIG. 1 is a diagram showing the schematic configuration of an engine and a control system thereof according to an embodiment.
[FIG. 2]

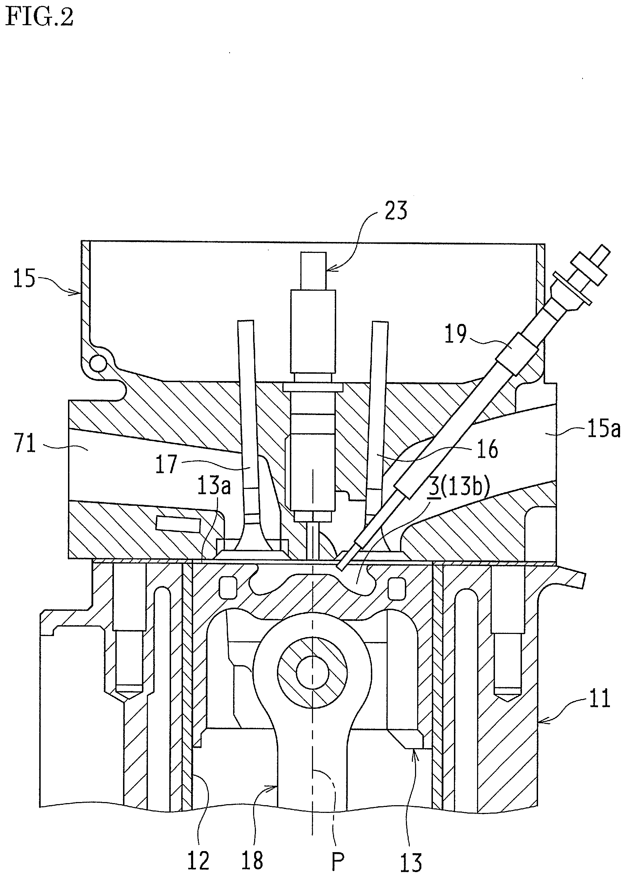

   FIG. 2 is a cross-sectional diagram showing a combustion chamber of a diesel engine and its surroundings.
[FIG. 3]

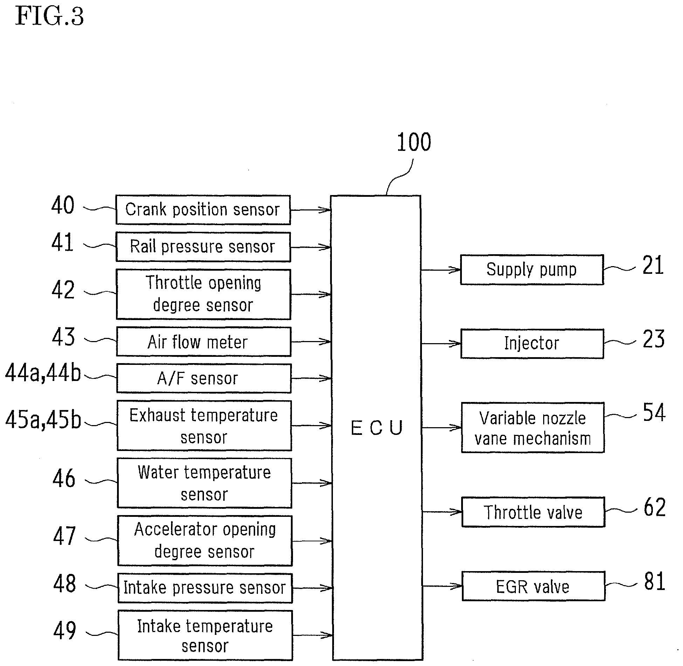

   FIG. 3 is a block diagram showing the configuration of a control system such as an ECU.
[FIG. 4]

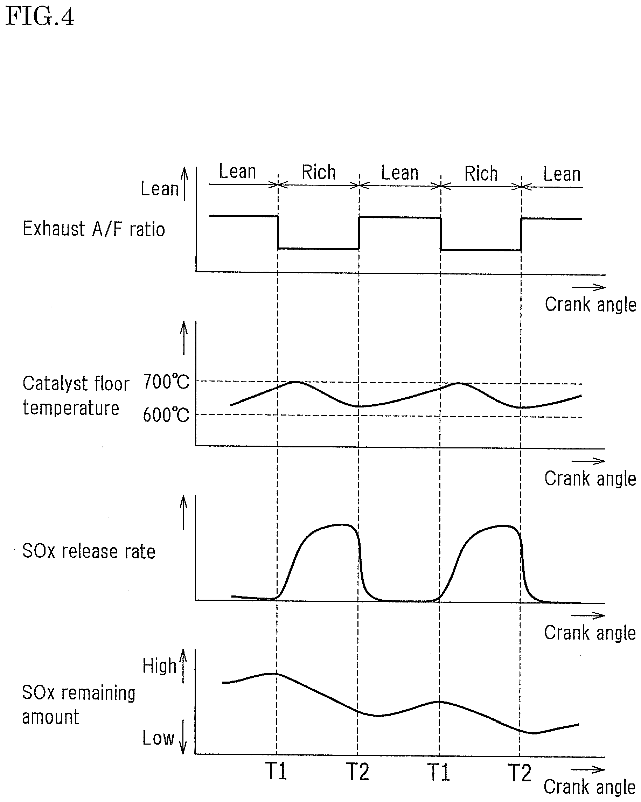

   FIG. 4 is a timing chart showing an example of change in the exhaust air-fuel ratio, the catalyst floor temperature, the rate of release of SOx from an NSR catalyst, and the amount of SOx remaining in the NSR catalyst when S poison recovery control is executed.
[FIG. 5]

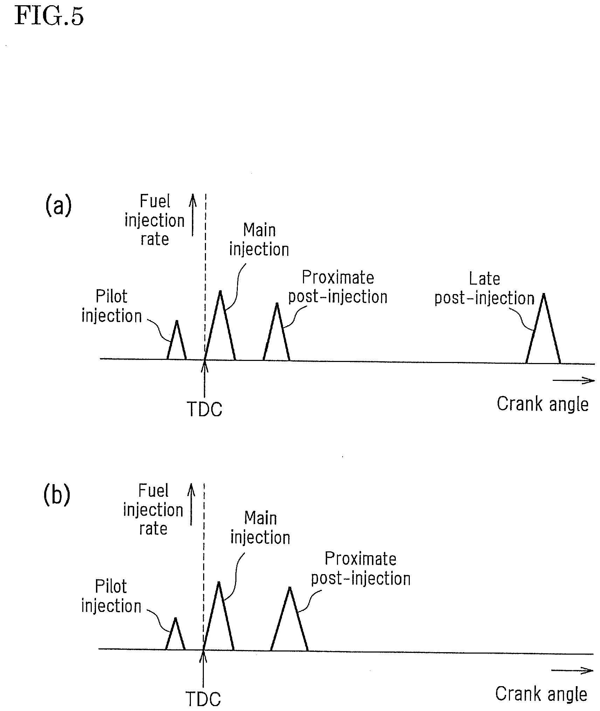

   FIGS. 5(a) and 5(b) are diagrams showing change in the injector fuel injection rate when S poison recovery control is executed, where FIG. 5(a) shows change in the fuel injection rate in a lean period, and FIG. 5(b) shows change in the fuel injection rate in a rich period.
[FIG. 6]

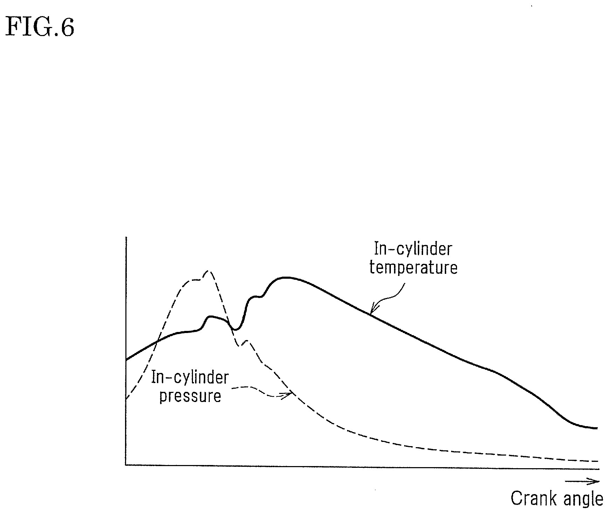

   FIG. 6 is a diagram showing an example of change in the in-cylinder temperature and the in-cylinder pressure when S poison recovery control is executed.
[FIG. 7]

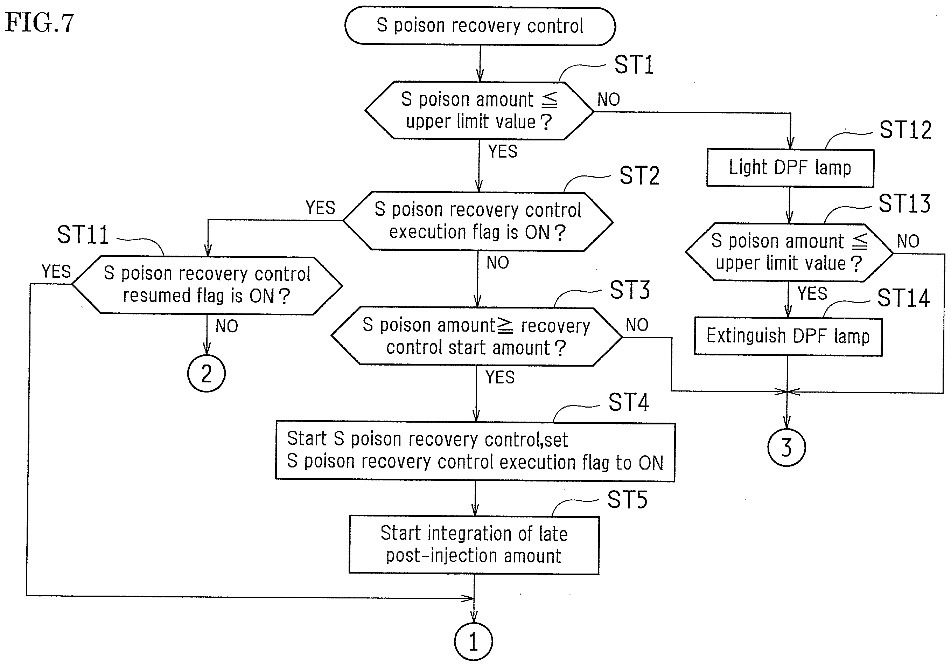

   FIG. 7 is a flowchart showing part of an operation procedure of S poison recovery control.
[FIG. 8]

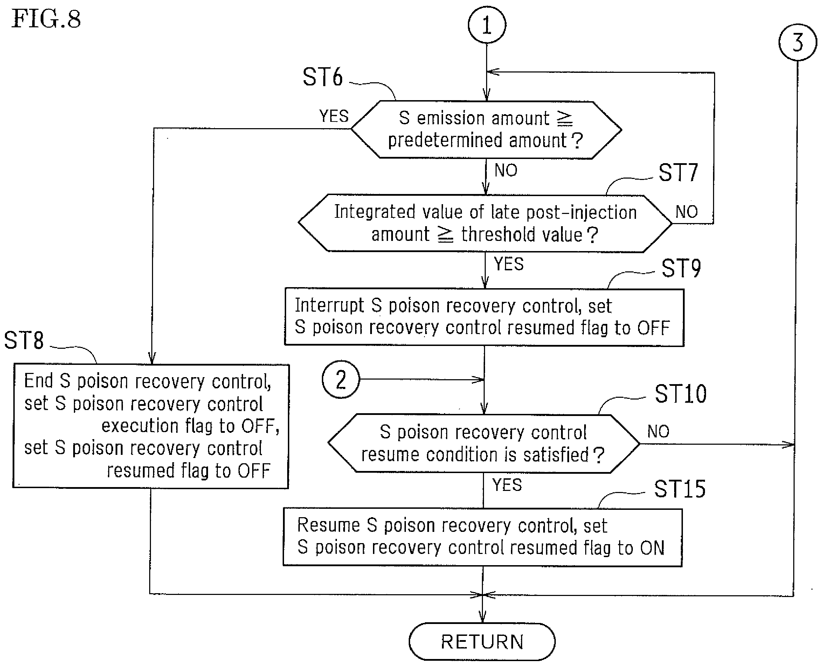

   FIG. 8 is a flowchart showing another part of the operation procedure of S poison recovery control.
[FIG. 9]

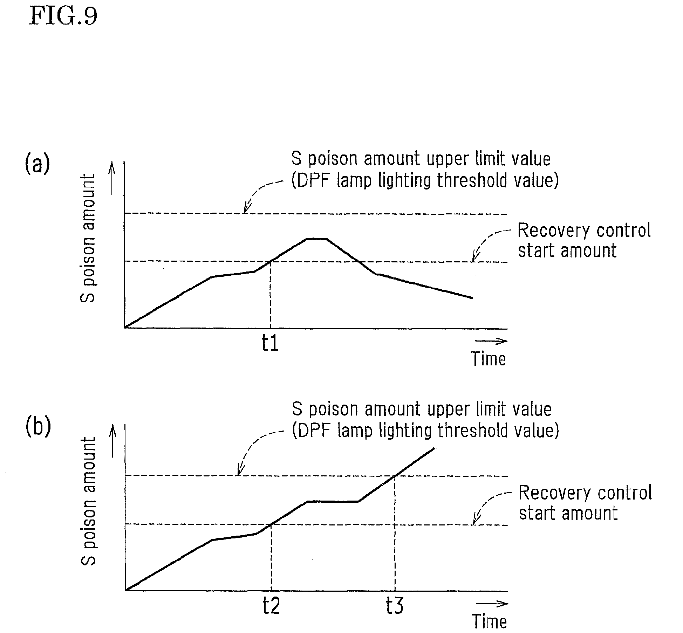

   FIGS. 9(a) and 9(b) are diagrams showing examples of change over time in the S poison amount, where FIG. 9(a) shows the case where the S poison amount is reduced to a recovery control start amount or lower due to executing S poison recovery control, and FIG. 9(b) shows the case where the S poison amount has reached an upper limit value due to interrupting the S poison recovery control, for example.
[FIG. 10]

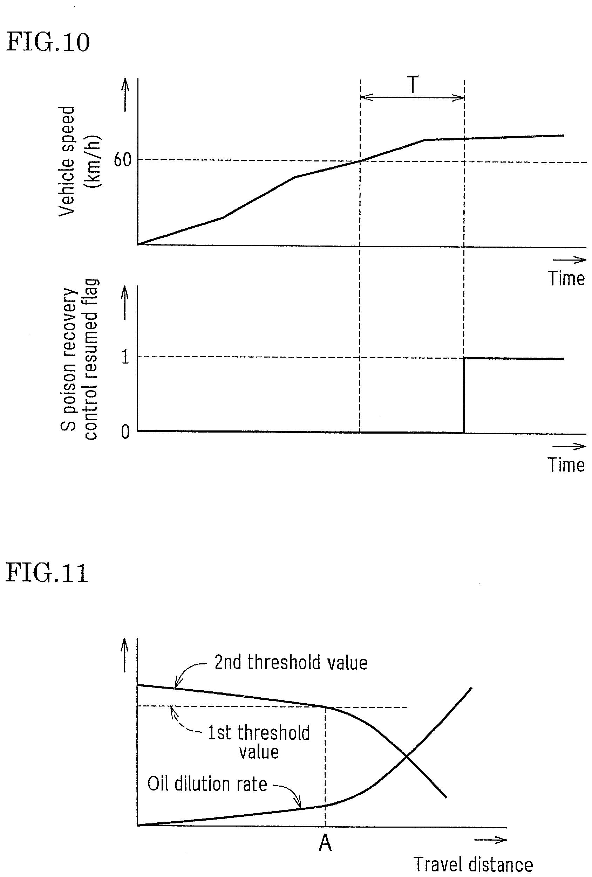

   FIG. 10 is a diagram showing the relationship between vehicle speed and an S poison recovery control resumed flag.
[FIG. 11]
   FIG. 11 is a diagram for describing the relationship between a determination threshold value for interrupting S poison recovery control and the oil dilution rate.

### [Mode for Carrying Out the Invention]

An embodiment of the present invention is described below with reference to the drawings. In this embodiment, a case will be described in which the present invention is applied to a common rail in-cylinder direct injection multi-cylinder (for example, inline four-cylinder) diesel engine (compression self-ignition internal combustion engine) mounted in an automobile.

### - Engine configuration -

First, the overall configuration of a diesel engine (referred to below as simply the engine) according to the present embodiment will be described. FIG. 1 is a schematic configuration diagram of an engine 1 and a control system thereof according to the present embodiment. Also, FIG. 2 is a cross-sectional diagram showing a combustion chamber 3 of the diesel engine 1 and its surroundings.

As shown in FIG. 1, the engine 1 of the present embodiment is configured as a diesel engine system having a fuel supply system 2, combustion chambers 3, an intake system 6, an exhaust system 7, and the like as its main portions.

The fuel supply system 2 is configured including a supply pump 21, a common rail 22, injectors (fuel injection valves) 23, an engine fuel path 27, and the like.

The supply pump 21 draws fuel from a fuel tank, and after putting the drawn fuel under high pressure, supplies the fuel to the common rail 22 via the engine fuel path 27. The common rail 22 has the functionality of an accumulation chamber in which the high pressure fuel is held (accumulated) at a predetermined pressure, and this accumulated fuel is distributed to the injectors 23. The injectors 23 are configured from piezo injectors within which a piezoelectric element (piezo element) is provided, and supply fuel by injection into the combustion chambers 3 by appropriately opening a valve.

The intake system 6 is provided with an intake manifold 63 connected to an intake port 15a formed in a cylinder head 15 (see FIG. 2), and an intake pipe 64 that constitutes an intake path is connected to the intake manifold 63. Also, in this intake path, an air cleaner 65, an air flow meter 43, and a throttle valve (intake throttle valve) 62 are disposed in the stated order from the upstream side. The air flow meter 43 outputs an electrical signal according to the amount of air that flows into the intake path via the air cleaner 65.

The exhaust system 7 is provided with an exhaust manifold 72 that is connected to exhaust ports 71 formed in the cylinder head 15, and an exhaust pipe 73 that constitutes an exhaust path is connected to the exhaust manifold 72. Also, an exhaust purification unit 77 is provided in the exhaust path. This exhaust purification unit 77 is provided with an NSR catalyst (exhaust purification catalyst) 75 serving as a NOx storage/reduction catalyst, and a diesel particulate filter (DPF) 76. Note that a DPNR catalyst may be applied as the exhaust purification unit 77.

The NSR catalyst 75 absorbs NOx when a large amount of oxygen exists in the exhaust, and reduces NOx to NO₂ or NO and releases it when the oxygen concentration of the exhaust is low and a large amount of a reduction component (e.g., an unburned fuel component (HC)) exists in the exhaust. The NOx that was released as NO₂ or NO quickly reacts with HC or CO in the exhaust so as to be further reduced to N₂. Also, by reducing NO₂ or NO, HC and CO are themselves oxidized into H₂O and CO₂. In other words, HC, CO, and NOx in the exhaust can be purified by appropriately adjusting the oxygen concentration and HC component in the exhaust that is introduced to the NSR catalyst 75. In the present embodiment, the adjustment of the oxygen concentration and the HC component in the exhaust is performed through an operation of injecting fuel from the injectors 23 (later-described post-injection) and control of the opening degree of the throttle valve 62. Details of this will be described later.

Also, the DPF 76 is constituted by a porous ceramic structure for example, and when exhaust gas passes through the porous walls, particulate matter (PM) contained in the exhaust gas is trapped. The DPF 76 also supports a catalyst that oxidizes and burns the trapped PM (e.g., an oxidation catalyst whose main component is a rare metal such as platinum) when a DPF regeneration operation is performed.

The following describes the combustion chamber 3 of the diesel engine and its surroundings with reference to FIG. 2. As shown in FIG. 2, in a cylinder block 11 that constitutes part of the engine main body, a cylindrical cylinder bore 12 is formed in each cylinder (each of four cylinders), and a piston 13 is housed within each cylinder bore 12 such that the piston 13 can slide vertically.

The combustion chamber 3 is formed on the upper side of a top face 13a of the piston 13. In other words, the combustion chamber 3 is defined by a lower face of the cylinder head 15 installed on top of the cylinder block 11, an inner wall face of the cylinder bore 12, and the top face 13a of the piston 13. A cavity (recess) 13b is provided in substantially the center of the top face 13a of the piston 13, and this cavity 13b also constitutes part of the combustion chamber 3.

The piston 13 is linked to a crankshaft serving as the engine output shaft by a connecting rod 18. Thus, back and forth movement of the piston 13 within the cylinder bore 12 is transmitted to the crankshaft via the connecting rod 18, and engine output is obtained due to rotation of this crankshaft. Also, a glow plug 19 is disposed facing the combustion chamber 3. The glow plug 19 glows due to the flow of electrical current immediately before the engine 1 is started, and functions as a starting assistance apparatus whereby ignition and combustion are promoted due to part of a fuel spray being blown onto the glow plug.

The intake port 15a and the exhaust port 71 are formed in the cylinder head 15, and furthermore an intake valve 16 that opens/closes the intake port 15a and an exhaust valve 17 that opens/closes the exhaust port 71 are disposed in the cylinder head 15. Also, the injector 23 that injects fuel directly into the combustion chamber 3 is installed in the cylinder head 15. The injector 23 is disposed substantially in the center above the combustion chamber 3, in an erect orientation along the cylinder centerline P, and injects fuel introduced from the common rail 22 toward the combustion chamber 3 in accordance with a predetermined timing.

Furthermore, as shown in FIG. 1, the engine 1 is provided with a turbocharger 5. This turbocharger 5 is provided with a turbine wheel 52 and a compressor wheel 53 that are linked via a turbine shaft 51. The compressor wheel 53 is disposed facing the inside of the intake pipe 64, and the turbine wheel 52 is disposed facing the inside of the exhaust pipe 73. Thus the turbocharger 5 uses exhaust flow (exhaust pressure) received by the turbine wheel 52 to rotate the compressor wheel 53, thereby performing a so-called supercharging operation that increases the intake pressure. In the present embodiment, the turbocharger 5 is a variable nozzle-type turbocharger, in which a variable nozzle vane mechanism (not shown) is provided on the turbine wheel 52 side, and by adjusting the opening degree of this variable nozzle vane mechanism it is possible to adjust the supercharging pressure of the engine 1.

An intercooler 61 for forcibly cooling intake air heated due to supercharging with the turbocharger 5 is provided in the intake pipe 64 of the intake system 6.

Also, the engine 1 is provided with an exhaust gas recirculation path (EGR path) 8 that connects the intake system 6 and the exhaust system 7. The EGR path 8 reduces the combustion temperature by appropriately directing part of the exhaust gas back to the intake system 6 and resupplying that exhaust gas to the combustion chamber 3, thus reducing the amount of NOx produced. Also, provided in the EGR path 8 are an EGR valve 81 that by being opened/closed steplessly under electronic control is capable of freely adjusting the flow rate of exhaust gas that flows through the EGR path 8, and an EGR cooler 82 for cooling exhaust that passes through (recirculates through) the EGR path 8. The EGR apparatus (exhaust gas recirculation apparatus) is constituted by the EGR path 8, the EGR valve 81, the EGR cooler 82, and the like.

### - Sensors -

Various sensors are installed at respective sites of the engine 1, and these sensors output signals related to environmental conditions at the respective sites and the operating condition of the engine 1.

For example, the air flow meter 43 outputs a detection signal according to the flow rate of intake air (the amount of intake air) on the upstream side of the throttle valve 62 within the intake system 6. An intake temperature sensor 49 is disposed in the intake manifold 63 and outputs a detection signal according to the temperature of intake air. An intake pressure sensor 48 is disposed in the intake manifold 63 and outputs a detection signal according to the intake air pressure. A/F (air-fuel ratio) sensors 44a and 44b output a detection signal that changes in a continuous manner according to the oxygen concentration in exhaust gas on the upstream side and the downstream side of the NSR catalyst 75. Note that an A/F sensor may be disposed on only the upstream side of the NSR catalyst 75, or may be disposed on only the downstream side of the NSR catalyst 75. In other words, it needs only be possible for an A/F sensor to detect or estimate the air-fuel ratio in exhaust gas (air-fuel ratio of exhaust gas that flows through the NSR catalyst 75) in the later-described S poison recovery control. Exhaust temperature sensors 45a and 45b are likewise disposed on the upstream side and the downstream side of the NSR catalyst 75, and output a detection signal according to the temperature of exhaust gas (exhaust temperature). Note that an exhaust temperature sensor may also be disposed on only the upstream side of the NSR catalyst 75, or may be disposed on only the downstream side of the NSR catalyst 75. In other words, it needs only be possible for an exhaust temperature sensor to detect or estimate the temperature of the exhaust gas (temperature of the exhaust gas that flows through the NSR catalyst 75) in the later-described S poison recovery control. A rail pressure sensor 41 outputs a detection signal according to the pressure of fuel accumulated in the common rail 22. A throttle opening degree sensor 42 detects the opening degree of the throttle valve 62.

### - ECU -

An ECU 100 includes a microcomputer configured by a CPU, a ROM, a RAM, and the like (not shown), and input/output circuits. As shown in FIG. 3, the input circuit of the ECU 100 is connected to the rail pressure sensor 41, the throttle opening degree sensor 42, the air flow meter 43, the A/F sensors 44a and 44b, the exhaust temperature sensors 45a and 45b, the intake pressure sensor 48, and the intake temperature sensor 49. Furthermore, the input circuit is connected to a water temperature sensor 46 that outputs a detection signal according to the coolant temperature of the engine 1, an accelerator opening degree sensor 47 that outputs a detection signal according to the amount of accelerator pedal depression, a crank position sensor 40 that outputs a detection signal (pulse) each time the output shaft (crankshaft) of the engine 1 rotates a specific angle, and the like.

On the other hand, the output circuit of the ECU 100 is connected to the supply pump 21, the injectors 23, the throttle valve 62, the EGR valve 81, and the variable nozzle vane mechanism (actuator that adjusts the opening degree of the variable nozzle vane) 54 of the turbocharger 5.

The ECU 100 also executes various types of control of the engine 1 based on output from the various sensors described above, calculation values obtained from an arithmetic expression employing the output values, and various maps stored in the ROM.

For example, the ECU 100 executes pilot injection (auxiliary injection) and main injection as fuel injection control with respect to the injectors 23.

Pilot injection is an operation for injecting a small amount of fuel prior to main injection from the injectors 23. Also, this pilot injection is an injection operation for suppressing ignition delay of fuel due to main injection so as to lead to stable diffusion combustion, and is sometimes also called "auxiliary injection".

Main injection is an injection operation for generating torque in the engine 1 (an operation for supplying fuel for torque generation). The injection amount in main injection is basically determined so as to obtain a required torque in accordance with operating conditions such as the engine speed, the accelerator operation amount, the coolant temperature, and the intake air temperature. For example, the greater the engine speed (engine rotational speed calculated based on the detection value from the crank position sensor 40) is or the greater the accelerator operation amount (the accelerator pedal depression amount detected by the accelerator opening degree sensor 47) is (i.e., the greater the accelerator opening degree is), the greater the torque requirement value of the engine 1 is, and the higher the fuel injection amount in main injection is, which is set according to the required torque value.

As one example of a specific fuel injection form, pilot injection (fuel injection from a plurality of injection holes formed in the injector 23) is executed before the piston 13 reaches compression top dead center, then fuel injection is suspended, and after a predetermined interval, main injection is executed when the piston 13 reaches the vicinity of compression top dead center. Accordingly, fuel burns due to self ignition, and the energy generated by this combustion then becomes kinetic energy for pushing the piston 13 down toward bottom dead center (energy that is to serve as engine output), thermal energy for raising the temperature in the combustion chamber 3, and thermal energy that is dissipated to the outside (e.g., coolant) via the cylinder block 11 and the cylinder head 15.

The fuel injection pressure when executing fuel injection is determined by the internal pressure of the common rail 22. In regard to the internal pressure of the common rail, normally, the higher the engine load (combustion engine load) is, and the higher the engine speed (combustion engine speed) is, the greater the target value for the pressure of fuel supplied from the common rail 22 to the injectors 23 (i.e., the target rail pressure) is. Note that the target rail pressure is set in accordance with, for example, a fuel pressure setting map stored in the ROM. It should also be noted that in the present embodiment, the fuel pressure is adjusted between 30 MPa and 200 MPa according to the engine load and the like.

Also, the ECU 100 determines the fuel injection amount and the fuel injection form based on the engine operating condition. Specifically, the ECU 100 calculates the engine rotational speed based on the detection value from the crank position sensor 40, obtains the accelerator pedal depression amount (accelerator opening degree) based on the detection value from the accelerator opening degree sensor 47, and determines the total fuel injection amount (sum of the injection amount in pilot injection and the injection amount in main injection) based on the engine rotational speed and the accelerator opening degree.

Note that in addition to the above-described pilot injection and main injection, after-injection and post-injection are performed as necessary. The functions of these types of injection are well known. In particular, in the later-described S poison recovery control, post-injection controls the air-fuel ratio of the exhaust gas (exhaust A/F), raises the temperature of the NSR catalyst 75, enrichens the exhaust A/F, and the like. This post-injection is also used to control the exhaust A/F in NOx reduction processing and DPF regeneration processing.

Also, the ECU 100 adjusts the amount of exhaust gas (EGR amount) that is recirculated to the intake manifold 63 by controlling the opening degree of the EGR valve 81 in accordance with the operating condition of the engine 1. The EGR amount is set in accordance with an EGR map that is created in advance through experimentation, simulation, or the like and stored in the ROM. The EGR map is a map for determining the EGR amount (EGR rate) using the engine speed and the engine load as parameters.

Next is a description of various types of processing and operations performed with respect to the exhaust purification unit 77. Examples of such processing and operations include NOx reduction processing, DPF regeneration processing, and S poison recovery control (sulfur poison recovery control), which is an operation that is a feature of the present embodiment. The following describes these types of processing and operations in order.

### - NOx reduction processing -

In general, in the diesel engine 1, the oxygen concentration of the air-fuel mixture including air and fuel for combustion in the combustion chamber 3 is in a high concentration state in most of the operation region. The oxygen concentration of the air-fuel mixture for combustion is normally reflected, as is, in the oxygen concentration in the exhaust after subtracting the oxygen for combustion, and if the oxygen concentration in the air-fuel mixture (air-fuel ratio: combustion A/F) is high, the oxygen concentration in the exhaust (air-fuel ratio: exhaust A/F) basically is also similarly high. Meanwhile, the NSR catalyst 75 has the characteristic of absorbing NOx if the oxygen concentration in the exhaust is high, and reducing NOx to NO₂ or NO and releasing it if the oxygen concentration is low as described above, and therefore the NSR catalyst 75 absorbs NOx as long as there is a high concentration of oxygen in the exhaust. Note that there is a limit to the amount of NOx that can be absorbed by the NSR catalyst 75, and when the amount of NOx absorbed by the NSR catalyst 75 has reached the limit, NOx in the exhaust passes through the catalyst casing without being absorbed by the NSR catalyst 75.

In view of this, the ECU 100 executes post-injection using the injectors 23 so as to temporarily reduce the oxygen concentration of the exhaust and furthermore increase the amount of reduction components (HC and the like). Accordingly, the NSR catalyst 75 reduces the absorbed NOx to NO₂ or NO and releases it, thus recovering (regenerating) its NOx absorption performance.

Note that the amount of absorbed NOx in the NSR catalyst 75 is estimated by recognizing the total NOx production amount based on history information regarding the engine speed and the amount of fuel injected into the cylinders. Then, if the estimated NOx amount exceeds a predetermined value that has been set in advance (an appropriate value at which the NOx absorption performance of the NSR catalyst 75 is not yet saturated), the post-injection is executed so as to perform NOx reduction processing and recover (regenerate) the NOx absorption performance of the NSR catalyst 75 as described above.

### - DPF regeneration processing -

The ECU 100 detects that PM is trapped in the DPF 76 by detecting the before/after differential pressure of the DPF 76. Specifically, a differential pressure sensor (differential pressure transducer) (not shown) is provided in order to detect the difference in pressure between points on the upstream side (engine 1 side) and downstream side of the DPF 76, which is configured by a porous ceramic structure for removing PM from exhaust gas, and the amount of PM trapped by the DPF 76 is obtained based on a differential pressure signal from the differential pressure sensor. Specifically, the higher the differential pressure is, the higher the amount of trapped PM is determined to be.

In the DPF regeneration processing, if the amount of PM that has accumulated in the DPF 76 is greater than or equal to a defined amount serving as a threshold value for determining whether the PM needs to be removed (if the differential pressure value is greater than or equal to a predetermined value), post-injection is executed using the injectors 23 such that a reducing agent such as fuel supplied to the exhaust pipe 73 undergoes an oxidation reaction in the NSR catalyst 75. The DPF 76 is heated (e.g., heated to approximately 600°C) by heat from that oxidation, thus enabling burning and eliminating the PM trapped in the DPF 76.

### - S poison recovery control -

The following describes S poison recovery control, which is an operation that is a feature of the present embodiment.

As described above, causing the air-fuel ratio of the exhaust that flows into the NSR catalyst 75 to spike to a target rich air-fuel ratio enables reducing NOx that is held in the NSR catalyst 75. However, SOx absorption occurs in the NSR catalyst 75 due to a mechanism similar to that in the case of holding NOx, and SOx that has been held desorbs less readily than NOx. Even when NOx is released in a reduction atmosphere having a low oxygen concentration, SOx gradually accumulates in the NSR catalyst 75 instead of desorbing. This sulfur poison (S poison) is a cause for a reduction in the NOx purification rate of the NSR catalyst 75.

The mechanism of the S poison is roughly as described below. SOx such as sulfur dioxide (SO₂) and sulfur trioxide (SO₃) is produced when fuel burns in the combustion chamber 3 of the engine 1. When the oxygen concentration of the exhaust flowing into the NSR catalyst 75 is high, SOx such as sulfur dioxide (SO₂) and sulfur trioxide (SO₃) in the inflowing exhaust is oxidized on the surface of the platinum (Pt) and held in the NSR catalyst 75 in the form of sulfate ions (SO₄²⁻).

The sulfate ions (SO₄²⁻) absorbed in the NSR catalyst 75 then bond with barium oxide (BaO) so as to form a sulfate salt (BaSO₄). Compared to barium nitrate (Ba(NO₃)₂), this sulfate salt (BaSO₄) is more stable and decomposes less readily, and remains in the NSR catalyst 75 instead of decomposing even if the oxygen concentration of the exhaust flowing into the NSR catalyst 75 is low.

If the amount of sulfate salt (BaSO₄) in the NSR catalyst 75 increases in this way, there is a corresponding decrease in the amount of barium oxide (BaO) that can contribute to the holding of NOx, and therefore the NOx holding performance of the NSR catalyst 75 decreases, and S poison is produced.

The amount of SOx remaining in the NSR catalyst 75 is measured based on the total amount of fuel injected from the injectors 23 from when the previous S poison recovery control ended and the sulfur concentration in the fuel.

One example of a method for eliminating S poison in the NSR catalyst 75 is a method in which the atmospheric temperature of the NSR catalyst 75 is raised to a high temperature range of approximately 600°C to 700°C and the oxygen concentration of the exhaust flowing into the NSR catalyst 75 is reduced, and thus the barium sulfate (BaSO₄) absorbed by the NSR catalyst 75 thermally decomposes into SO₃⁻ and SO₄⁻, and then the SO₃⁻ and SO₄⁻ react with hydrocarbon (HC) and carbon monoxide (CO) in the exhaust so as to be reduced to gaseous SO₂⁻.

In the present embodiment, S poison is eliminated by executing the above-described post-injection and controlling the opening degree of the throttle valve 62 so as to cause oxidation of the unburned fuel component in the NSR catalyst 75, raise the floor temperature of the NSR catalyst 75 using the heat produced by the oxidation, and make the exhaust A/F rich.

Specifically, the post-injection raises the floor temperature of the NSR catalyst 75 to the high temperature range of approximately 600°C to 700°C, and the ECU 100 subsequently executes post-injection in order to continue to reduce the oxygen concentration of the exhaust flowing into the NSR catalyst 75. In other words, a target air-fuel ratio is determined such that the exhaust A/F is less than or equal to a theoretical A/F (less than or equal to 14.7) when S poison recovery is performed. Note that the target air-fuel ratio is determined such that the exhaust A/F is from 20 to 23, for example, during operation in which S poison recovery control is not executed.

Next is a description of basic operations of S poison recovery control with reference to FIGS. 4 to 6. FIG. 4 is a timing chart showing an example of change in the exhaust air-fuel ratio, the catalyst floor temperature, the rate of release of SOx from the NSR catalyst 75 (amount of SOx released per unit of rotation angle of the crankshaft), and the amount of SOx remaining in the NSR catalyst 75 when S poison recovery control is executed.

In S poison recovery control, a lean period in which the exhaust A/F is set so as to be lean and a rich period in which the exhaust A/F is set so as to be rich are alternately switched, and the floor temperature of the NSR catalyst 75 in the lean period is raised to a temperature at which desorption of SOx is possible (temperature at which barium sulfate (BaSO₄) can thermally decompose into SO₃⁻ and SO₄⁻). Also, in the rich period, the exhaust A/F is made rich in order to cause the desorption of SOx from the NSR catalyst 75 (cause SO₃⁻ and SO₄⁻ to react with hydrocarbon (HC) and carbon monoxide (CO) in the exhaust so as to be reduced to gaseous SO₂⁻).

Also, the timing of the switch from the lean period to the rich period is the point in time when the floor temperature of the NSR catalyst 75 has reached a temperature sufficient for causing desorption of SOx (e.g., 680°C). Furthermore, the timing of the switch from the rich period to the lean period is the point in time when the floor temperature of the NSR catalyst 75 has decreased to a predetermined temperature (e.g., 630°C). As a result of alternately repeating such a lean period and rich period, SOx desorbs from the NSR catalyst 75.

This will now be described more specifically with reference to FIGS. 4 to 6. When S poison recovery control is started after the amount of S poison has reached a predetermined value, first the lean period is entered, in which the exhaust air-fuel ratio is set so as to be lean. As shown in FIG. 5(a), in this lean period, proximate post-injection (referred to as "angle-of-advance post-injection" in the present invention) is executed after the execution of pilot injection and main injection, and then late post-injection (referred to as "angle-of-delay post-injection" in the present invention) is executed. The temperature of the exhaust gas is raised with these types of post-injection. In particular, fuel injected in the late post-injection flows into the exhaust system 7 in an unburned state, and then effectively raises the temperature of the exhaust gas by undergoing combustion in the exhaust system 7. FIG. 6 shows change in the in-cylinder temperature and the in-cylinder pressure in this case.

Note that the proximate post-injection is started at 30° after compression top dead center of the piston 13, for example. Since the in-cylinder pressure is relatively high at this time, the flight distance of the fuel injected in this proximate post-injection is relatively short, and almost none of it attaches to the wall surface of the cylinders, thus causing almost no oil dilution. In contrast, the late post-injection is started at 100° after compression top dead center of the piston 13, for example. Since the in-cylinder pressure is relatively low at this timing, the flight distance of the fuel injected in this late post-injection is relatively long, and the fuel tends to attach to the wall surface of the cylinders, and thus there is the possibility of causing oil dilution. The injection timings of the proximate post-injection and the late post-injection are to be set appropriately, rather than being limited to the timings described above.

The rise in the exhaust gas temperature in the lean period is accompanied by a rise in the floor temperature of the NSR catalyst 75 as well, and when this floor temperature reaches a predetermined temperature (e.g., 680°C), there is a switch from the lean period to the rich period (timing T1 in FIG. 4). As shown in FIG. 5(b), in this rich period, proximate post-injection is executed after the execution of pilot injection and main injection. In this case, late post-injection is not executed. Also, the opening degree of the throttle valve 62 is reduced to a predetermined opening degree so as to reduce the amount of air flowing into the cylinders. Accordingly, the air-fuel ratio in the cylinders becomes rich, and the exhaust A/F also becomes rich. In other words, in this rich period, the exhaust A/F becomes rich while the floor temperature of the NSR catalyst 75 has been increased sufficiently (increased to a temperature at which desorption of SOx is possible), and therefore SOx desorbs from the NSR catalyst 75.

In this rich period, SOx is released from the NSR catalyst 75 as shown by the waveform of the SOx release rate shown in FIG. 4. The amount of SOx remaining in the NSR catalyst 75 thus gradually decreases (see the waveform indicating the remaining amount of SOx shown in FIG. 4).

The floor temperature of the NSR catalyst 75 gradually decreases in this rich period, and when the floor temperature reaches a predetermined temperature (e.g., 630°C), there is a switch from the rich period to the lean period (timing T2). Similarly to the case described above, in this lean period, proximate post-injection is executed after the execution of the pilot injection and the main injection, and then late post-injection is executed. The exhaust gas temperature is raised again with these types of post-injection.

As the lean period and the rich period are switched according to the floor temperature of the NSR catalyst 75 in this way, SOx is gradually released from the NSR catalyst 75, and the amount of SOx adsorbed in the NSR catalyst 75 decreases. Then, when the amount of adsorbed SOx falls below a predetermined amount, S poison recovery control ends (the case where later-described processing for interrupting S poison recovery control is not carried out).

Note that the amount of SOx released from the NSR catalyst 75 is measured based on the floor temperature of the NSR catalyst 75 and the rich period. Specifically, the amount of released SOx increases the higher the floor temperature of the NSR catalyst 75 is and the longer the rich period is, and therefore the amount of released SOx is obtained by measuring the floor temperature of the NSR catalyst 75 and the rich period. Then, when the amount of released SOx matches the above-described amount of SOx remaining in the NSR catalyst 75 (amount of remaining SOx that was measured based on the total amount of fuel injected from the injectors 23 and the sulfur concentration of the fuel), it is determined that substantially the entire amount of SOx in the NSR catalyst 75 was released, and S poison recovery control ends.

Also, since the lean period and the rich period are switched according to the floor temperature of the NSR catalyst 75, the lean period is shorter and the rich period is longer in an operating condition in which the exhaust gas temperature is high, such as when the engine 1 is operating under a high load. Also, in this case, the injection amount in the late post-injection executed in the lean period is set low.

The basic operations of S poison recovery control are as described above.

In the present embodiment, if the integrated amount of injection in the late post-injection has exceeded a predetermined amount when S poison recovery control is executed, S poison recovery control is interrupted. The following gives a specific description of this. If the vehicle speed is relatively low, for example, the injection amount in main injection will be relatively low, and the engine speed will be relatively low, thus making it impossible to sufficient raise the exhaust temperature even if the aforementioned post-injection (proximate post-injection and late post-injection) is executed. Therefore even if the exhaust air-fuel ratio is made rich in this situation (even if control of the rich period is executed), it is difficult to effectively release SOx from the NSR catalyst 75.

As a result, the injection amount in post-injection increases in a situation in which SOx has not been sufficiently released, thus leading to oil dilution due to the attachment of sprayed fuel to the cylinder wall surfaces, and leading to a reduction in the fuel consumption rate.

In the present embodiment, in order to resolve such a problem, if the integrated amount of injection in the late post-injection has exceeded a predetermined amount, S poison recovery control is interrupted so as to reduce the injection amount in post-injection, suppress oil dilution, and improve the fuel consumption rate. In other words, in a situation in which the integrated amount of injection in the late post-injection exceeds a predetermined amount, it is determined that the situation is a situation in which the release of SOx from the NSR catalyst 75 is not being performed effectively (a situation in which the exhaust temperature cannot be raised sufficiently, and SOx is not effectively released from the NSR catalyst 75 even if the exhaust air-fuel ratio is made rich), and S poison recovery control is interrupted so as to suppress oil dilution and improve the fuel consumption rate.

The following describes the specific operation procedure of S poison recovery control with reference to the flowcharts of FIGS. 7 and 8. The processing of these flowcharts is executed at a predetermined interval (e.g., every several msec) after the engine 1 starts.

First, in step ST1, it is determined whether the amount of S poison (amount of sulfur that has been adsorbed) in the NSR catalyst 75 is less than or equal to a predetermined upper limit value. This upper limit value is the allowable limit value of the amount of S poison in the NSR catalyst 75, and is set in advance as a value according to which the exhaust emission exceeds a regulation value if the amount of S poison has exceeded the upper limit value.

When the vehicle starts to travel, or immediately after previous S poison recovery control ended, the amount of S poison in the NSR catalyst 75 is less than or equal to the predetermined upper limit value.

If the amount of S poison in the NSR catalyst 75 is less than or equal to the predetermined upper limit value, and an affirmative determination is made in step ST1, the procedure moves to step ST2, in which it is determined whether an S poison recovery control execution flag that is stored in the ECU 100 is ON. This S poison recovery control execution flag is set to ON when S poison recovery control starts, and is set to OFF when that S poison recovery control ends normally (S poison recovery control ends normally if substantially the entire amount of SOx in the NSR catalyst 75 was released). When the vehicle starts to travel, or immediately after previous S poison recovery control ended, the amount of S poison in the NSR catalyst 75 is low, and therefore S poison recovery control is not started, and the S poison recovery control execution flag is OFF.

If the S poison recovery control execution flag is OFF, and a negative determination is made in step ST2, the procedure moves to step ST3, in which it is determined whether the amount of S poison is greater than or equal to a recovery control start amount. This recovery control start amount is set as a value that is a predetermined amount lower than the upper limit value of the amount of S poison, that is to say, is set in advance as a value according to which S poison recovery control is necessary if the amount of S poison has reached this recovery control start amount.

When the vehicle starts to travel, or immediately after previous S poison recovery control ended, the amount of S poison is not greater than or equal to the recovery control start amount, and therefore a negative determination is made in step ST3, and the procedure returns without other processing (FIG. 8).

The amount of S poison then increases as driving of the engine 1 continues, and if the amount of S poison rises so as to be greater than or equal to the recovery control start amount, an affirmative determination is made in step ST3, and the procedure moves to step ST4. In step ST4, S poison recovery control is started. Also, the S poison recovery control execution flag is switched from OFF to ON along with the start of S poison recovery control. Accordingly, S poison recovery control is executed by the above-described lean period and rich period being alternately switched.

When S poison recovery control is started, the integration of the injection amount in late post-injection is started in step ST5. This integration of the late post-injection amount is performed by integrating command values indicating late post-injection amounts that are output from the ECU 100 to the injectors 23. Also, these command values indicating late-post injection amounts are adjusted according to the engine load. Specifically, if the engine load is relatively high, the exhaust gas temperature is high due to a high injection amount in main injection, and therefore the injection amount in late post-injection, which is fuel injection for raising the exhaust gas temperature, is set low. Conversely, if the engine load is relatively low, or the vehicle speed is low, the exhaust gas temperature is low due to a low injection amount in main injection, and therefore the injection amount in late post-injection is set high.

When S poison recovery control is executed while integrating the injection amount in late post-injection in this way, it is determined in step ST6 (FIG. 8) whether the amount of S emitted from the NSR catalyst 75 (desorption amount) has reached a predetermined value. This predetermined value is set as an S emission amount for ending S poison recovery control, such as a value that corresponds to the S adsorption amount when S poison recovery control starts, or a value that is slightly lower than the S adsorption amount when S poison recovery control starts. Note that the amount of S emitted from the NSR catalyst 75 is calculated based on the floor temperature of the NSR catalyst 75 and the exhaust A/F as described above.

If the amount of S emitted from the NSR catalyst 75 has not reached the predetermined value, that is to say, if S poison recovery control continues to be executed, a negative determination is made in step ST6, and the procedure moves to step ST7. In step ST7, it is determined whether the integrated value of the injection amount in late post-injection that was calculated has reached a value that is greater than or equal to a predetermined threshold value (referred to as the "recovery control interruption amount" in the present invention). This threshold value will be described later.

If the integrated value of the late post-injection amount has not reached a value that is greater than or equal to the predetermined threshold value, and a negative determination is made in step ST7, the procedure returns to step ST6, and it is determined whether the amount of S emitted from the NSR catalyst 75 has reached the predetermined value.

If the amount of S emitted from the NSR catalyst 75 reaches the predetermined value before the integrated value of the injection amount in late post-injection has reached a value greater than or equal to the predetermined threshold value, an affirmative determination is made in step ST6, and the procedure moves to step ST8. If it is determined in step ST8 that the amount of S emitted from the NSR catalyst 75 has reached the predetermined value, processing for ending S poison recovery control is performed. Specifically, S poison recovery control is ended by stopping post-injection, and then the S poison recovery control execution flag is set to OFF, and the S poison recovery control resumed flag stored in the ECU 100 is set to OFF. Accordingly, S poison recovery control is ended, and control transitions to normal engine control with the NOx absorption performance of the NSR catalyst 75 in a recovered state.

FIG. 9(a) is a diagram showing an example of change over time in the S poison amount in the case where S poison recovery control was ended due to the amount of S emitted from the NSR catalyst 75 having reached the predetermined value in this way. As shown in FIG. 9(a), the S poison amount rises to a value greater than or equal to the recovery control start amount (timing t1 in FIG. 9(a), affirmative determination in step ST3), S poison recovery control is started, and then when the amount of S emitted from the NSR catalyst 75 has reached the predetermined value (affirmative determination in step ST6) due to the S poison recovery control, the S poison recovery control is ended (step ST8).

On the other hand, if the integrated value of the injection amount in late post-injection reaches a value greater than or equal to the predetermined threshold value before the amount of S emitted from the NSR catalyst 75 has reached the predetermined value (before an affirmative determination in step ST6), an affirmative determination is made in step ST7, and the procedure moves to step ST9. In step ST9, processing for interrupting S poison recovery control is performed. Specifically, S poison recovery control is interrupted by stopping post-injection, and the S poison recovery control resumed flag is set to OFF. S poison recovery control is thus temporarily interrupted.

After S poison recovery control has been interrupted in this way, the procedure moves to step ST10, in which it is determined whether an S poison recovery control resume condition has been satisfied. This S poison recovery control resume condition is satisfied if the floor temperature of the NSR catalyst 75 has risen to a temperature at which SOx can be released. One specific example of the S poison recovery control resume condition is that, as shown in FIG. 10, the vehicle speed has continued to be greater than or equal to 60 km/h for a predetermined time period T (e.g., 5 sec). If this S poison recovery control resume condition is satisfied, the S poison recovery control resumed flag is switched from OFF to ON, and the above-described S poison recovery control using post-injection is resumed. In one example, the exhaust purification apparatus is configured such that after the integrated amount of fuel supplied to the exhaust system reaches the recovery control interruption amount and the supply of fuel is interrupted, if a situation occurs in which the temperature of the exhaust system reaches a predetermined temperature, the supply of fuel to the exhaust system is resumed.

If the S poison recovery control resume condition is not satisfied, and a negative determination is made in step ST10, the procedure returns. In this case, the S poison recovery control execution flag is ON, and the S poison recovery control resumed flag is OFF. An affirmative determination is therefore made in step ST2, and the procedure moves to step ST11. In step ST11, it is determined whether the S poison recovery control resumed flag is ON. Since the S poison recovery control resumed flag is OFF at this time, a negative determination is made in step ST11, and the procedure returns to step ST10. In other words, it is determined whether the S poison recovery control resume condition has been satisfied. This operation is repeated until the S poison recovery control resume condition is satisfied. In other words, the interrupted state of S poison recovery control is maintained.

Also, if the amount of S poison in the NSR catalyst 75 exceeds the predetermined upper limit value before the S poison recovery control resume condition is satisfied, a negative determination is made in step ST1, and the procedure moves to step ST12. In step ST12, a DPF lamp arranged on a meter panel (instrument panel) in the vehicle compartment is lit. This DPF lamp is a lamp for notifying the driver that the amount of S poison has exceeded the predetermined upper limit value, and prompts the driver to accelerate the vehicle (e.g., accelerate to 60 km/h).

FIG. 9(b) is a diagram showing an example of change over time in the S poison amount in the case where the amount of S poison in the NSR catalyst 75 exceeded the predetermined upper limit value in this way. As shown in FIG. 9(b), the S poison amount reaches a value greater than or equal to the recovery control start amount (timing t2 in FIG. 9(b), affirmative determination in step ST3), S poison recovery control is started, the S poison recovery control is thereafter interrupted, for example, such that the S poison amount increases, and then when the amount of S poison in the NSR catalyst 75 exceeds the predetermined upper limit value (timing t3 in FIG. 9(b), negative determination in step ST1), the DPF lamp is lit (step ST12).

In step ST13, it is determined whether the amount of S poison in the NSR catalyst 75 has reached a value less than or equal to the predetermined upper limit value. If the S poison amount has not yet reached a value less than or equal to the predetermined upper limit value, and a negative determination is made in step ST13, the procedure returns without other processing. In other words, the lighting of the DPF lamp is maintained, and the procedure waits for the S poison amount to reach a value less than or equal to the predetermined upper limit value due to S poison recovery that is performed when the driver accelerates the vehicle.

On the other hand, if S poison recovery is performed due to the driver accelerating the vehicle, and an affirmative determination is made in step ST13, the procedure moves to step ST14, in which the DPF lamp is extinguished. In other words, if the S poison amount has reached a value less than or equal to the predetermined upper limit value, it is determined that the situation in which the exhaust emission exceeds the regulation value no longer exists, and the request for the driver to accelerate the vehicle is canceled.

If the S poison recovery control resume condition is satisfied, and an affirmative determination is made in step ST10, the procedure moves to step ST15, in which processing for resuming S poison recovery control is performed. Specifically, S poison recovery control is resumed by executing post-injection, and then the S poison recovery control resumed flag is set to ON. Accordingly, S poison recovery control is resumed, and the procedure returns. In this case, the S poison recovery control execution flag is ON, and the S poison recovery control resumed flag is also ON. For this reason, an affirmative determination is made in step ST2, and an affirmative determination is made in step ST11 as well. The procedure therefore returns to the determination operation of step ST6. In other words, when S poison recovery control is resumed, it is then determined whether the amount of S emitted from the NSR catalyst 75 has reached the predetermined value. Operations subsequent to the determination operation in step ST6 are performed similarly to those described above, and if the amount of S emitted from the NSR catalyst 75 reaches the predetermined value due to the resumption of S poison recovery control, processing for ending S poison recovery control is performed in step ST8. Also, if the integrated value of the injection amount in late post-injection that is calculated reaches a value greater than or equal to the predetermined threshold value while S poison recovery control has been resumed, processing for interrupting S poison recovery control is again performed in step ST9. The above operations are repeated, and SOx in the NSR catalyst 75 is released.

The following describes the threshold value that is mentioned above (the threshold value used in the determination made in step ST7). There are two threshold values, namely a first threshold value for suppressing the fuel consumption rate to a value less than or equal to an allowable limit, and a second threshold value for suppressing the above-described oil dilution rate to a value less than or equal to an allowable limit (e.g., an oil dilution rate percentage in the low tens). The first threshold value is set in advance as a fixed value. On the other hand, the second threshold value is changed according to the oil dilution rate. The second threshold value is set to a value greater than the first threshold value if the oil dilution rate is relatively low, and is set to a value less than the first threshold value if the oil dilution rate is relatively high.

FIG. 11 is a diagram for describing the relationship between these threshold values and the oil dilution rate. As shown in FIG. 11, the second threshold value gradually decreases as the oil dilution rate rises, and when the vehicle travel distance exceeds A in FIG. 11, the second threshold value falls below the first threshold value. In other words, the threshold value for suppressing the oil dilution rate to a value less than or equal to the allowable limit (second threshold value) falls below the threshold value for suppressing the fuel consumption rate to a value less than or equal to the allowable limit (first threshold value).

Examples of causes for the rise in the oil dilution rate include, as described above, a rise in the injection amount in late post-injection and the lengthening of the period in which late post-injection is executed (the lean period) due to the exhaust temperature being low when the vehicle speed is relatively low.

The threshold value that is applied in the determination operation in step ST7 is the lower threshold value between the first threshold value and the second threshold value. For this reason, the first threshold value is applied until the travel distance reaches A in FIG. 11, and it is determined whether the integrated value of the injection amount in late post-injection that was calculated has reached a value greater than or equal to the first threshold value, that is to say, whether the fuel consumption rate is being suppressed to a value less than or equal to the allowable limit. If the integrated value of the injection amount in late post-injection has exceeded the first threshold value, it is determined that the fuel consumption rate has exceeded the allowable limit, and processing for interrupting S poison recovery control is performed. In other words, since the oil dilution rate is relatively low, the timing for performing processing for interrupting S poison recovery control is specified with greater consideration being given to the fuel consumption rate than to the oil dilution rate.

On the other hand, the second threshold value is applied when the travel distance exceeds A in FIG. 11, and it is determined whether the integrated value of the injection amount in late post-injection that was calculated has reached a value greater than or equal to the second threshold value, that is to say, whether the oil dilution rate is being suppressed to a value less than or equal to the allowable limit. If the integrated value of the injection amount in late post-injection has exceeded the second threshold value, it is determined that the oil dilution rate has exceeded the allowable limit, and processing for interrupting S poison recovery control is performed. In other words, since the oil dilution rate is relatively high, the timing for performing processing for interrupting S poison recovery control is specified with greater consideration being given to the oil dilution rate than the fuel consumption rate.

As described above, according to the present embodiment, if the integrated amount of injection in late post-injection exceeds a predetermined amount when S poison recovery control is being executed, the S poison recovery control is interrupted. In other words, it is determined that the fuel being supplied to the exhaust system 7 in S poison recovery control is not being used effectively, and that there is a high possibility of oil dilution due to the attachment of the fuel to wall surfaces in the combustion chambers 3, and the supply of fuel to the exhaust system 7 is interrupted. This enables avoiding oil dilution and a reduction in the fuel consumption rate that accompany the execution of S poison recovery control.

### - Other embodiments -

In the above-described embodiment, a description is given taking the example where the present invention is applied to an in-line four-cylinder diesel engine mounted in an automobile. The present invention is not limited to use in an automobile, and is applicable also to engines used in other applications. Also, there is no particular limitation with respect to the number of cylinders or the engine type (classified as an in-line engine, V-type engine, horizontal opposed engine, and so forth).

Also, although the above embodiment describes the case where a piezo injector 23 in which the fuel injection rate is changed by achieving full valve opening only when power is being conducted is applied to the engine 1, the present invention is also applicable to an engine in which a variable injection rate injector is applied.

### [Industrial Applicability]

The present invention is applicable to S poison recovery control performed on a NOx storage/reduction catalyst in a diesel engine mounted in an automobile.

### [Reference Signs List]

- 1: Engine (internal combustion engine)
- 12: Cylinder bore
- 23: Fuel injection valve (injector)
- 3: Combustion chamber
- 44a, 44b: A/F sensor
- 45a, 45b: Exhaust temperature sensor
- 7: Exhaust system
- 75: NSR catalyst (exhaust purification catalyst)
- 77: Exhaust purification unit
- 100: ECU

## Claims

1. An exhaust purification apparatus for an internal combustion engine that performs sulfur poison recovery control for causing a sulfur component that is adsorbed to an exhaust purification catalyst provided in an exhaust system of the internal combustion engine to desorb from the exhaust purification catalyst by supplying fuel to the exhaust system,
wherein the fuel supplied to the exhaust system is supplied from a fuel injection valve that injects fuel into a combustion chamber,
the exhaust purification apparatus is configured such that as an injection form of fuel injected from the fuel injection valve into the combustion chamber in order to raise the temperature of the exhaust system in the sulfur poison recovery control, angle-of-advance post-injection and angle-of-delay post-injection that are executed after piston compression top dead center are performed within a same combustion cycle, and the sulfur poison recovery control is interrupted by stopping post-injection if an integrated amount of fuel injected in the angle-of-delay post-injection reached a recovery control interruption amount, and
the recovery control interruption amount is set to an amount at which it is determined that an oil dilution rate reached a predetermined value due to the fuel injected from the fuel injection valve attaching to a wall surface in the combustion chamber.

2. The exhaust purification apparatus for an internal combustion engine according to claim 1, wherein the recovery control interruption amount is set to a value that is lower as there is a rise in the oil dilution rate due to the fuel injected from the fuel injection valve attaching to a wall surface in the combustion chamber.

3. The exhaust purification apparatus for an internal combustion engine according to claim 2,
wherein one of a first threshold value for suppressing a fuel consumption rate to a value less than or equal to a predetermined allowable limit and a second threshold value for suppressing the oil dilution rate to a value less than or equal to the predetermined value is selected and set as the recovery control interruption amount, and
the exhaust purification apparatus is configured such that if the oil dilution rate is less than the predetermined value, and the first threshold value is less than the second threshold value, the first threshold value is selected as the recovery control interruption amount, and if the oil dilution rate is greater than or equal to the predetermined value, and second threshold value is less than the first threshold value, the second threshold value is selected as the recovery control interruption amount.

4. The exhaust purification apparatus for an internal combustion engine according to any one of claims 1 to 3, wherein the exhaust purification apparatus is configured such that after the integrated amount of fuel supplied to the exhaust system reaches the recovery control interruption amount and the supply of fuel is interrupted, if a situation occurs in which the temperature of the exhaust system reaches a predetermined temperature, the supply of fuel to the exhaust system is resumed.

5. The exhaust purification apparatus for an internal combustion engine according to claim 4,
wherein the exhaust purification apparatus is mounted in a vehicle, and
the situation in which the temperature of the exhaust system reaches the predetermined temperature is a case in which the vehicle travelling speed has continued to have reached a predetermined speed for a predetermined time period.

## Patentansprüche

1. Abgasreinigungsvorrichtung für einen Verbrennungsmotor, der Schwefelgift-Rückgewinnungssteuerung durchführt, um eine Schwefelkomponente, die an einem in einem Abgassystem des Verbrennungsmotors bereitgestellten Abgasreinigungskatalysator adsorbiert ist, zu veranlassen, aus dem Abgasreinigungskatalysator zu desorbieren, indem dem Abgassystem Kraftstoff zugeführt wird,
wobei der dem Abgassystem zugeführte Kraftstoff von einem Kraftstoffeinspritzventil zugeführt wird, das Kraftstoff in eine Brennkammer einspritzt,
wobei die Abgasreinigungsvorrichtung so ausgelegt ist, dass, als eine Einspritzform von Kraftstoff, die von dem Kraftstoffeinspritzventil in die Brennkammer eingespritzt wird, um die Temperatur des Abgassystems in der Schwefelgift-Rückgewinnungssteuerung zu erhöhen, Voreilwinkel-Nacheinspritzung und Nacheilwinkel-Nacheinspritzung, die nach Kolbenkompression am oberen Totpunkt ausgeführt werden, innerhalb eines gleichen Verbrennungszyklus durchgeführt werden, und dass die Schwefelgift-Rückgewinnungssteuerung unterbrochen wird durch Stoppen der Nacheinspritzung, wenn eine integrierte Menge von bei der Nacheilwinkel-Nacheinspritzung eingespritztem Kraftstoff eine Rückgewinnungssteuerung-Unterbrechungsmenge erreicht, und
wobei die Rückgewinnungssteuerungs-Unterbrechungsmenge auf eine Menge gesetzt wird, bei der bestimmt wird, dass eine Ölverdünnungsrate aufgrund des von dem an einer Wandoberfläche in der Brennkammer befestigten Kraftstoffeinspritzventil eingespritzten Kraftstoffs einen vorbestimmten Wert erreicht.

2. Abgasreinigungsvorrichtung für einen Verbrennungsmotor nach Anspruch 1, wobei die Rückgewinnungssteuerungs-Unterbrechungsmenge auf einen Wert gesetzt ist, der niedriger ist, da es aufgrund des von dem an einer Wandoberfläche in der Brennkammer befestigten Kraftstoffeinspritzventil eingespritzten Kraftstoffs zu einem Anstieg der Ölverdünnungsrate kommt.

3. Abgasreinigungsvorrichtung für einen Verbrennungsmotor nach Anspruch 2,
wobei einer aus einem ersten Schwellenwert zum Unterdrücken einer Kraftstoffverbrauchsrate auf einen Wert kleiner als oder gleich einem vorbestimmten zulässigen Grenzwert und einem zweiten Schwellenwert zum Unterdrücken der Ölverdünnungsrate auf einen Wert kleiner als oder gleich dem vorbestimmten Wert ausgewählt und als die Rückgewinnungssteuerungs-Unterbrechungsmenge gesetzt wird, und
wobei die Abgasreinigungsvorrichtung so ausgelegt ist, dass, wenn die Ölverdünnungsrate kleiner als der vorbestimmte Wert ist und der erste Schwellenwert kleiner als der zweite Schwellenwert ist, der erste Schwellenwert als die Rückgewinnungssteuerungs-Unterbrechungsmenge ausgewählt wird, und dass, wenn die Ölverdünnungsrate größer als oder gleich dem vorbestimmten Wert ist und der zweite Schwellenwert kleiner als der erste Schwellenwert ist, der zweite Schwellenwert als die Rückgewinnungssteuerungs-Unterbrechungsmenge ausgewählt wird.

4. Abgasreinigungsvorrichtung für einen Verbrennungsmotor nach einem der Ansprüche 1 bis 3, wobei die Abgasreinigungsvorrichtung so ausgelegt ist, dass, wenn, nachdem die integrierte Menge von Kraftstoff, die dem Abgassystem zugeführt wird, die Rückgewinnungssteuerungs-Unterbrechungsmenge erreicht und die Kraftstoffzufuhr unterbrochen wird, eine Situation auftritt, bei der das Abgassystem eine vorbestimmte Temperatur erreicht, die Zufuhr von Kraftstoff zum Abgassystem wiederaufgenommen wird.

5. Abgasreinigungsvorrichtung für einen Verbrennungsmotor nach Anspruch 4,
wobei die Abgasreinigungsvorrichtung in einem Fahrzeug montiert ist, und
wobei die Situation, in der die Temperatur des Abgassystems die vorbestimmte Temperatur erreicht, ein Fall ist, in dem die Fahrzeugfahrtgeschwindigkeit fortgesetzt wurde, um für einen vorbestimmten Zeitraum eine vorbestimmte Geschwindigkeit erreicht zu haben.

## Revendications

1. Appareil d'épuration d'échappement pour un moteur à combustion interne qui réalise une commande de récupération de soufre toxique pour faire en sorte qu'un composant soufré adsorbé sur un catalyseur d'épuration d'échappement placé dans un système d'échappement du moteur à combustion interne se désorbe du catalyseur d'épuration d'échappement par alimentation du système d'échappement en carburant,
le carburant alimentant le système d'échappement étant alimenté à partir d'une soupape d'injection de carburant qui injecte du carburant dans une chambre de combustion,
l'appareil d'épuration d'échappement étant configuré de sorte que, en tant que mode d'injection de carburant injecté à partir de la soupape d'injection de carburant dans la chambre de combustion dans le but d'élever la température du système d'échappement dans le cadre de la commande de récupération de soufre toxique, une post-injection avec angle d'avance et une post-injection avec angle de retard exécutées après le point mort haut de la compression de piston soient réalisées au sein d'un même cycle de combustion et la commande de récupération de soufre toxique soit interrompue par arrêt de la post-injection si une quantité intégrée de carburant injecté dans la post-injection avec angle de retard atteint une quantité d'interruption de commande de récupération, et
la quantité d'interruption de commande de récupération étant fixée à une quantité à laquelle il est déterminé qu'un taux de dilation d'huile a atteint une valeur prédéterminée du fait de l'adhérence du carburant injecté à partir de la soupape d'injection de carburant à une surface de paroi dans la chambre de combustion.

2. Appareil d'épuration d'échappement pour un moteur à combustion interne selon la revendication 1, dans lequel la quantité d'interruption de commande de récupération est fixée à une valeur inférieure en cas d'élévation du taux de dilution d'huile du fait de l'adhérence du carburant injecté à partir de la soupape d'injection de carburant à une surface de paroi dans la chambre de combustion.

3. Appareil d'épuration d'échappement pour un moteur à combustion interne selon la revendication 2,
dans lequel une valeur parmi une première valeur-seuil destinée à réfréner un taux de consommation de carburant à une valeur inférieure ou égale à une limite admissible prédéterminée et une deuxième valeur-seuil destinée à réfréner le taux de dilution d'huile à une valeur inférieure ou égale à la valeur prédéterminée est sélectionnée et fixée comme quantité d'interruption de commande de récupération, et
dans lequel appareil d'épuration d'échappement est configuré de sorte que, si le taux de dilution d'huile est inférieur à la valeur prédéterminée et la première valeur-seuil est inférieure à la deuxième valeur-seuil, la première valeur-seuil soit sélectionnée comme quantité d'interruption de commande de récupération et, si le taux de dilution d'huile est supérieur ou égal à la valeur prédéterminée et la deuxième valeur-seuil est inférieure à la première valeur-seuil, la deuxième valeur-seuil soit sélectionnée comme quantité d'interruption de commande de récupération.

4. Appareil d'épuration d'échappement pour un moteur à combustion interne selon l'une quelconque des revendications 1 à 3, dans lequel appareil d'épuration d'échappement est configuré de sorte que, une fois que la quantité intégrée de carburant alimentant le système d'échappement atteint la quantité d'interruption de commande de récupération et l'alimentation en carburant est interrompue, l'alimentation en carburant du système d'échappement reprenne dans le cas de figure où la température du système d'échappement atteint une température prédéterminée.

5. Appareil d'épuration d'échappement pour un moteur à combustion interne selon la revendication 4,
dans lequel appareil d'épuration d'échappement est monté dans un véhicule, et
dans lequel le cas de figure où la température du système d'échappement atteint la température prédéterminée correspond au cas où la vitesse de déplacement du véhicule continue d'atteindre une vitesse prédéterminée pendant une période de temps prédéterminée.
